# EUROPEAN PATENT APPLICATION

(11) **EP 1 739 418 A1**
(43) Date of publication of application: **03.01.2007**
(21) Application number: 05734482.2
(22) Date of filing: 21.04.2005
(51) Int. Cl.: G01N 27/447, G01N 33/68

(54) **SUBSTRATE FOR LABO-ON-A-CHIP**

(30) Priority: 21.04.2004 JP 2004125127
(71) Applicant: TORAY INDUSTRIES, INC., Tokyo 103-8666 (JP)
(72) Inventor: YAMAZAKI, Yoshiaki, Kamakura-shi, Kanagawa 248-0031 (JP); KAWAZOE, Naoki, Kamakura-shi, Kanagawa 248-0031 (JP); HIGASA, Masashi, Takatsuki-shi, Osaka 569-1115 (JP); JUNG, Giman, Kamakura-shi, Kanagawa 248-0034 (JP); NOBUMASA, Hitoshi, Ohtsu-shi Shiga 520-0043 (JP); MURAKAMI, Yuji, Kamakura-shi, Kanagawa 248-0034 (JP)
(74) Representative: Kador & Partner
(86) International application number: PCT/JP2005/007587
(87) International publication number: WO 2005/103670

(57) **Abstract**

The present invention provides a lab-on-chip substrate resistant to washing and usable for an extended period of time without adsorption of proteins on the base material surface, i.e., a protein electrophoretic polymeric chip having a microchannel allowing high-accuracy analysis of trace amounts of proteins because of reduction in the amount of detection noise.

## Description

### [TECHNICAL FIELD]

The present invention relates to a lab-on-chip substrate used in flow, reaction or analysis of a protein solution, among many devices and apparatuses used in structural and functional analysis of proteins and reaction of proteins.

### [BACKGROUND ART]

Chips carrying microchannels for various chemical reactions are attracting attention currently from the viewpoints of reaction efficiency and velocity and reagents used, and a new concept of analytical method called "lab-on-chip" analysis of conducting chemical reaction or analysis on a microchannel formed on a several centimeter-square glass chip is already well established. Along with the progress in biotechnology, use of such a microchannel is inevitable also in the biochemical field, and the microchannel method has a great potential especially in structural and functional analysis of proteins and reaction by using proteins.

A serious obstacle in supplying a protein solution into a microchannel is adsorption of the proteins therein on the surface of the microchannel, which leads to significant decrease in concentration and structural change of less abundant proteins, and occasionally, even to clogging of the microchannel with the adsorbed proteins when the circuit is used repeatedly. Generally known is a method of applying a hydrophilic polymer such as a polyalkylene glycol on the substrate surface for prevention of adsorption of proteins.

For example disclosed is a chip having a channel coated with polyethylene glycol and/or 2-methacryloyloxyethylphosphorylcholine polymer and a method of forming a microchannel on a resin substrate and performing synthesis and detection of proteins (Patent Document 1). However, these substrates are only coated with a hydrophilic polymer on the surface, and disadvantageously, the hydrophilic polymer is easily separated, for example, when the substrate is washed. Although a method of applying a hydrophilic monomer molecule on the substrate of a resin substrate by immersion and polymerizing the monomer for prevention of the adsorption of proteins is already known (Patent Document 2), the substrate and the polymer are not bound covalently also in this case and the hydrophilic polymer on the substrate wall is easily separated.

A method of binding a polyalkylene glycol covalently onto the surface of polydimethylsiloxane by UV light irradiation is known as the method of covalently binding a hydrophilic polymer onto the surface (Non-patent Document 1). However, it is necessary to irradiate higher-energy ray to covalently binding a polyalkylene glycol onto the surface of a polymer having a lower silicon content, and, in such a case, the resulting substrate is not usable for analysis because of discoloration thereof. In addition, polydimethylsiloxane is difficult to mold by injection molding, and it is difficult to mass-produce a chip carrying a microchannel in the commercial scale. Most of the polymers used in processing of conventional chips had smaller silicon content, and it is technically difficult to perform surface-grafting on these polymers by the conventional UV light-irradiating method.

Alternatively, a method of preventing adsorption of proteins by coating a polyalkylene glycol electrostatically on the polymer substrate surface is known (Non-patent Document 2). However, the bond formed by the method between the polyalkylene glycol and the substrate is weaker, and a greater amount of the polyalkylene glycol is released from the substrate, when the substrate is washed with a solvent. Thus, it is not possible to perform separation and phoresis of proteins only by coating a polyalkylene glycol electrostatically on the channel wall of a chip of a polymer substrate carrying a microchannel.
Patent Document 1: Japanese Patent Application Laid-Open (JP-A) No. 2003-334056
Patent Document 2: Japanese Patent Application National Publication (Laid-Open) No. 2001-500971
Non-patent Document 1: Hu Shuwen et al., "Surface Modification of Poly(dimnethylsiloxane): Microfluidic Devices by Ultraviolet Polymer Grafting)" Analytical Chemistry, 2002, vol. 74, 16, pp. 4117-4123
Non-patent Document 2: Si Lei, "Biomimetic Surfaces of Biomaterials Using Mucin-Type Glycoproteins", Trends in Glycoscience and Glycotechnology, 2000, vol. 12, 66, pp. 229-239

### [DISCLOSURE OF THE INVENTION]

The present invention relates to a lab-on-chip substrate, comprising a resin having a silicon content of 10% or less by weight as its base material and a hydrophilic polymer covalently bound onto the surface thereof.

### [BEST MODE FOR CARRYING OUT THE INVENTION]

The present invention relates to a lab-on chip substrate comprising a resin having a silicon content of 10% or less by weight as its base material and a hydrophilic polymer covalently bound onto the surface thereof.

The resin in the present invention means a material of a single polymer or a mixed or modified polymer, or the polymeric material contained in a blend or composite material obtained from a polymeric material and, for example, glass, metal, or carbon material. Both thermoplastic and thermosetting polymers may be used favorably as such a synthetic polymer. There are various polymerization methods available, and examples of the polymeric materials according to the present invention include synthetic polymers by any one of these methods. Typical examples thereof include (1) addition polymers: homopolymers, copolymers, or the mixtures or derivatives of the homopolymer or copolymer, of a monomer selected from the group consisting of olefins, vinyl compounds other than olefins, vinylidene compounds and other carbon-carbon double bond-containing compounds, (2) polycondensation polymers: polyesters, polyamides and the like, or the mixtures or derivatives thereof, (3) addition condensation products: phenol resins, urea resins, melamine resins, xylene resins and the like, or the mixtures or derivatives thereof, (4) polyaddition polymers: polyurethanes, polyureas and the like, or the mixtures or derivatives thereof, (5) ring-opening polymers: homopolymers or copolymers of cyclopropane, ethyleneoxide, propyleneoxide, lactone, lactam, or the like, or the mixtures or derivatives of the homopolymer or copolymer, (6) cyclic polymers: homopolymers or copolymers of a divinyl compound (for example: 1,4-pentadiene), a diyne compound (for example: 1,6-heptadiyne), or the like, or the mixtures or derivatives of the homopolymer or copolymer (7) isomerization polymers: such as alternating copolymer of ethylene and isobutene, (8) electrolytic polymers ; homopolymers or copolymer of pyrrole, aniline, acetylene, or the like, or the mixtures or derivatives of the homopolymer or copolymer, (9) polymers of an aldehyde or a ketone, (10) polyether sulfones, (11) polypeptides, and the like. Examples of the natural polymers include pure resins, mixtures or derivatives of cellulose, protein or polysaccharide, and the like.

The resin for use as the base material according to the present invention is particularly preferably the addition polymer mentioned above. The monomer for the addition polymer is not particularly limited; and the olefin may be used, for example, an α-olefin such as ethylene, propylene, 1-butene, 1-pentene, 1-hexene, 4-methyl-1-pentene, or 1-octene for a homopolymer, a copolymer of two or more, or the mixture of the homopolymer and/or the copolymer. The vinyl compound other than olefins according to the present invention is a vinyl group-containing compound, and examples thereof include vinyl chloride, styrene, acrylic acid, methacrylic acid, acrylic or methacrylic esters, vinyl acetate, vinyl ethers, vinyl carbazole, acrylonitrile, and the like. The vinylidene compound other than olefins is a vinylidene group-containing compound, and examples thereof include vinylidene chloride, vinylidene fluoride, isobutylene, and the like. Examples of the carbon-carbon double bond-containing compounds other than the olefins, vinyl compounds, and vinylidene compounds include maleic anhydride, pyromellitic anhydride, 2-butenoic acid, tetrafluoroethylene, trifluorochloroethylene, compounds having two or more double bonds such as butadiene, isoprene, and chloroprene, and the like.

The addition polymer according to the present invention favorably used as the resin for base material may be a homopolymer, a copolymer of two or more monomers, or a mixture of the polymers from these monomers. Particularly preferable are polyethylene, copolymers of ethylene with another α-olefin, polypropylene, and copolymers of propylene with another α-olefin. The copolymers include both random and block copolymers. Favorable examples of polymeric materials other than polyolefins include homopolymers or copolymer of at least one monomer selected from the group consisting of vinyl compounds other than olefins, vinylidene compounds other than olefins, and other carbon-carbon double bond-containing compounds such as polymethacrylic ester resins, polyacrylic ester resins, polystyrene, polytetrafluoroethylene, acrylonitrile copolymers (acrylic fiber and molding, ABS resin, etc.), butadiene-containing copolymers (synthetic rubber), and polyamide (including aliphatic polyamides such as nylon and aromatic polyamides), polyester (including polyethylene terephthalate and aliphatic and wholly aromatic polyesters), polycarbonate, polyurethane, polybenzoate, polyether sulfone, polyacetal, various synthetic rubbers, and the like.

Among them, the base material according to the present invention is preferably a material containing, as its principal component, a polymer such as polyolefin, polyimide, polycarbonate, polyarylate, polyester, polyacrylonitrile, a polymethacrylic resin such as polymethyl methacrylate, polyamide, polysulfone resin, or cellulosic resin, and thus, chips containing such a resin as the base material above are effective. Among them, chips containing a polysulfone resin, a polymethacrylic resin, polyacrylonitrile, polyamide, or a cellulosic resin are particularly effective.

The silicon content in the resin according to the present invention used as the base material is preferably 10% or less, because a higher silicon content leads to softening of the resin and decrease in the rigidity of the chip, and consequently to deformation of the resin by external force such as the pressure during forming microchannel. The silicon content is a rate obtained by dividing the total amount of silicon in the resin by the total amount of the resin molecules.

The covalent bond in the present invention is a bond formed between two atoms sharing electrons, and is a sigma bond, a pi bond, or other non-localized covalent bond and/or other covalent bond.

The lab-on-chip substrate having a hydrophilic polymer bound covalently according to the present invention has the following advantages.

The first advantage is washing resistance. There are many chip-molding methods, including injection, reaction injection, vacuum, vacuum heat-pressing, stamping, compression, extrusion, expansion, blowing, pulverization, casting, and the like. Microchannels formed by any one of these molding methods may be stained with impurities such as release agent, monomer, initiator, and the like, and thus, should be washed thoroughly for removal of these impurities before the lab-on-chip substrate is used. When a microchannel is formed by coating, the surface-coated hydrophilic polymer and others may be exfoliated. However, the covalently-bound surface hydrophilic polymer is resistant to exfoliation, even after washing several times.

The second advantage is reduction of detection noise. A test sample on the lab-on-chip substrate according to the present invention migrates, for example, by the difference or gradient of pressure, concentration, electric field, or magnetic field, by surface force, by inertia force, or by combination of these forces. The hydrophilic polymer simply coated the surface with becomes exfoliated, when the test sample is developed by such a method. Thus, it becomes difficult to perform accurate analysis because substances other than those in test sample are detected during measurement. However, when the hydrophilic polymer is bound covalently, the hydrophilic polymer is resistant to exfoliation and thus, reduces the noise.

The third advantage is elongation of effective time for use. In the present invention, although the period of protein analysis is normally, preferably 5 minute, more preferably 3 minute, it is not particularly limited, and in some cases, the analysis is performed over a longer period, for example, of 30 minutes or more. The hydrophilic polymer formed on the surface by coating is exfoliated easily during use for an elongated period of time. However, the covalently-bound surface hydrophilic polymer according to the present invention is resistant to exfoliation even during use for a longer period.

The hydrophilic polymer according to the present invention means a water-soluble polymer or a polymer that is not easily soluble in water but is hydrophilic. Typical examples thereof include polyvinylalcohol, carboxymethylcellulose, ethylene-vinyl alcohol copolymer, polyhydroxyethyl methacrylate, poly-α-hydroxyvinylalcohol, polyacrylic acid, poly-α-hydroxyacrylic acid, polyvinylpyrrolidone, polyalkylene glycols such as polyethylene glycol and polypropylene glycol, starches such as potato starch, corn starch and wheat starch, glucomannan, silk fibroin, silk sericin, agar, gelatin, albumin protein, sodium alginate, and the like. Alternatively, the sulfonated derivatives of the compound may also be used.

The hydrophilic polymer according to the present invention is preferably a polyalkylene glycol. The polyalkylene glycol is, for example, a linear polymer such as polyethylene glycol or polypropylene glycol having an oxygen atom in the main chain, but may be a polyalkylene glycol-grafted polymer. The molecular weight of the polyalkylene glycol is not particularly limited; but a polyalkylene glycol having a number-average molecular weight of 600 to 4,000,000, more preferably of approximately 10,000 to 1,000,000, is used favorably for prevention of adsorption of proteins on the chip.

The lab-on-chip substrate according to the present invention preferably has a hydrophilic polymer preferably bound to a base material surface covalently by irradiation with high-energy ray.

In preparation of the hydrophilic polymer covalently bound to a base material surface by irradiation with high-energy ray in the present invention, the chip is first immersed in or brought into contact with a solution of a hydrophilic polymer, preferably a polyalkylene glycol, and then irradiated with a high-energy ray such as gamma ray or electron beam. When a polyalkylene glycol used as the hydrophilic polymer, the temperature of the polyalkylene glycol solution is not particularly limited, but preferably 0°C or higher and 30°C or lower, more preferably 10°C or higher and 25°C or less. The solvent for the polyalkylene glycol solution is also not particularly limited, and good solvents such as water, methanol, ethanol, and acetone are favorably used, but use of water is more preferable from the points of cost and safety.

In the present invention, the high-energy ray means an energy ray having a certain energy, and examples thereof include microwave, infrared ray, visible ray, ultraviolet ray, X ray, gamma ray, electron beam, proton beam, and neutron beam. The gamma ray is a ray having a wavelength of 10⁻¹² to 10⁻¹⁵ m. In the present invention, the resin used as the base material has a silicon content of 10% or less, and, among the high-energy rays, gamma ray, which allows graft polymerization of the hydrophilic polymer directly on the resin substrate, is preferable.

The amount of high-energy ray irradiated is not particularly limited, if it is sufficient for immobilizing the polyalkylene glycol chain on the chip or microchannel surface that is desirably made resistant to protein adsorption; and when gamma ray is used, the absorption energy is normally 100 kGy or less, preferably 40 kGy or less, and more preferably 10 kGy or less, at which there is fewer influence on the test sample by yellowing of the resin substrate.

The term "lab-on-chip" used in the present invention means an integrated chip on which various scientific operations such as reaction, separation, purification, and detection of sample solution are conducted simultaneously. It is possible to perform ultrahigh-sensitivity analysis, ultratrace-amount analysis, or ultra-flexible simultaneous multi-item analysis by using a lab-on-chip. An example thereof is a chip having a protein-producing unit, a protein-purifying unit, and a protein-detecting unit that are connected to each other via microchannels. The lab-on-chip substrates according to the present invention include substrates carrying all or part of the units and substrates carrying only microchannels or not carrying the microchannels.

The region of the substrate to be bound with a hydrophilic polymer on the lab-on-chip substrate according to the present invention is not particularly limited, but at least one of the protein-producing unit, protein-purifying unit, protein-detecting unit, and microchannel wall is preferably hydrophilized. The hydrophilic polymer may be bound only to the channels in the protein-processing chip.

The depth of the protein-producing unit on the lab-on-chip substrate according to the present invention is in the range from a minimum depth allowing the protein-producing tank to accept a reaction solution in an amount sufficient for protein synthesis to the maximum depth of the protein-producing tank allowable on the substrate; and the preferable range is 1 µm or more and 1,000 µm or less. The lower limit is more preferably 20 µm or more, and the dimension in length and width is preferably in the range of 10 µm or more and 5,000 µm or less. The lower limit is more preferably 50 µm or more. The preferable range is 200 µm or more and 2,000 µm or less.

The reaction solution placed in the protein-producing tank may contains, for example, known E. coli extract, wheat germ extract, or rabbit reticulocyte extract (ribosomes, aminoacyl tRNA synthetases, various soluble translation factors needed in protein synthesis are contained in extract), as well as a buffer solution, raw materials of protein synthesis such as amino acids, and energy sources such as ATP and GTP.

The width and the depth of the protein-purifying unit are not particularly limited, and the unit is large enough to accept the carrier for protein purification.

The carrier for protein purification is not particularly limited, but examples thereof include glasses (including modified and functionalized), plastics (including acrylic plastics, polystyrene, copolymers of styrene with another material, polypropylene, polyethylene, polybutylene, polyurethane, fluoroplastics, and the like), polysaccharides, nylon, nitrocellulose, resins, silica-based materials including silica and modified silicones, carbon, metals, and the like.

In the protein-detecting unit, proteins are analyzed, for example, by electrophoresis. Typical examples of the method include agarose gel electrophoresis, capillary electrophoresis in which the microchannels in the detecting unit are used as capillary tubes, isoelectric point electrophoresis, SDS-PAGE, Native-PAGE, µ-CE, microchip electrophoresis, and the like. Particularly preferable used in the present invention is SDS-PAGE. In a typical method, the protein in the protein solution fed from the protein-producing unit and protein-purifying unit is denatured in its spatial protein structure by addition of urea, SDS (sodium dodecylsulfate), 2-mercaptoethanol, or the like, and then analyzed in the microchannel by PAGE (polyacrylamide gel electrophoresis).

The electrophoresis for detection is preferably performed by on-chip electrophoresis on the same chip carrying both protein-producing and protein-purifying units. In this way, it is possible to perform all synthesis, purification, and detection on a single chip. Use of the on-chip electrophoresis enables reduction in electrophoretic period and increase in high-throughput of the series of operations from synthesis to detection.

The microchannels are formed by bonding a plate-shaped base material carrying formed grooves with another base material, or from a thin film having penetrating slits and at least two base materials by making the base materials hold the thin film in between. The base material may be a molding in any shape, sheet, plate, film, rod-shaped, solenoidal, coated film, cylindrical or other, but the shape is not limited thereto. The shape is preferably sheet, plate, or film, from the point of processability and convenience in handling.

The protein-processing chip according to the present invention is a chip having a function to analyze, for example, the molecular weight, affinity, or electrical properties of a protein by electrophoresis. The chip may be used also for synthesis, purification, or coloring of a protein, and is effective in preventing adsorption of proteins in any case. Chips having microchannels inside are also included in the protein-processing chips.

Protein adsorption on a conventional glass or plastic protein-processing chip occurs rapidly in a short term; the adsorption rate (rate of adsorbed proteins with respect to the proteins in the solution brought into contact) may reach as high as approximately 50% in low-concentration range (approximately 1 ng to 100 µg/ml); the proteins once adsorbed cause irreversible structural change (denaturation) into denatured proteins, which in turn induce secondary protein adsorption, leading to formation of multilayered adsorption layer of proteins. It is possible to prevent the protein adsorption by coating the surface, with which the protein solution becomes in contact, with a hydrophilic polymer, in particular with a polyalkylene glycol, i.e., by reducing the hydrophobic interaction, the greatest factor leading to protein adsorption.

In the present description, the protein means a compound having a structure in which multiple amino acids are connected via peptide bonds, and examples thereof include natural peptides, synthetic peptides, and short-chain peptides. The peptide may contain sugars, nucleic acids, and lipids in addition to amino acids as the constituent components.

The analyte protein according to the present invention is not particularly limited; any one of natural peptides, synthetic peptides and nucleoproteins, glycoproteins, lipoproteins containing elements other than amino acids may be analyzed; furthermore water-soluble proteins are used particularly favorably. The size of measurable molecules is also not particularly limited, and it is possible to analyze any size of proteins by using a suitable marker. The molecular weight range of the protein separable in the chip according to the present invention is not particularly limited, but is preferably in the range of 10 kDa to 200 kDa, more preferably 14 kDa to 140 kDa. The protein or the like bound to the film is preferably solubilized before it is subjected to the electrophoresis according to the present invention. The solubilization is performed, for example, mechanically under ultrasonication by using a salt solution or a chelator such as EDTA or chemically by using a surfactant.

The carrier for separation for use in the electrophoresis according to the present invention is not particularly limited; examples thereof include the reagents commonly used in molecule-size separation of proteins in capillary gel electrophoresis, microchip gel electrophoresis, or the like; typical examples thereof include separation carriers such as polyacrylamide, polyacrylamide gel, hydroxypropylcellulose hydroxymethylpropylcellulose, hydroxyethylcellulose, methylcellulose, β-cyclodextrin, α-cyclodextrin, and γ-cyclodextrin; and the β-1,3-glucan structure-containing curdlan, laminaran, and seaweed extracts described in PCT/JP01/04510 are also applicable. The additive for the carrier for separation is, for example, sodium dodecylsulfate (SDS), Triton X-100, ε-aminocaproic acid, 3-[(3-cholamidopropyl)-dimethylamino]-1-propane, CHAPS, 6 to 8 M urea, tetramethylethylenediamine (TEMED), hexyltrimethylammonium bromide (HTAB), dodecyltrimethylammonium bromide (DTAB), or the like.

Examples of the electrophoretic buffer solutions include Tris-glycine buffer, Tris-borate buffer, Tris-hydrochloride buffer, Tris-tricine buffer, Tris-sodium dihydrogen phosphate buffer and the like; and buffer solutions commonly used in protein electrophoresis and other commercially available buffer solutions for protein-electrophoresis kits may also be used. The electrophoretic buffer solution may be used generally at the concentration used as the electrophoretic buffer solution for proteins.

The electrophoretic buffer solution may contain one of the carriers for separation described above. It is possible to make the operation easier and perform the analysis at higher speed, by using the carrier for separation as it is added into an electrophoretic buffer solution.

The pH of the electrophoretic buffer solution is preferably 2.0 to 9.0, more preferably 6.8 to 8.6, from the viewpoints of suitable electro-osmotic flow and protein electrophoresis.

The solution for sample preparation used is, for example, water, an SDS solution, or an SDS and Tris-borate solution containing 2-mercaptoethanol or dithiothreitol added. Water is particularly preferable, for improvement in peak intensity, improvement in peak separation coefficient, improvement in limit of detection, and improvement in measurement accuracy. Examples of the water include waters commonly used in protein electrophoresis such as ultrapure water, deionized water, and Milli-Q water; but Milli-Q water is particularly preferable.

When water is used as the solution for sample preparation, the protein is preferably dissolved in water, for enhancement of the peak intensity and improvement in the limit of detection.

The concentration of the protein in sample solution is not particularly limited, but preferably 0.05 to 2,000 ng/µl, more preferably, 0.1 to 2,000 ng/µl, and particularly preferably 0.5 to 200 ng/µl, from the viewpoint of measurement accuracy.

Favorable embodiments of the electrophoresis by using the chip according to the present invention include capillary electrophoresis, microchip electrophoresis, and nanochannel electrophoresis.

In the capillary electrophoresis, test proteins are developed in a capillary normally, after an electrophoretic buffer solution is filled in a capillary having an internal diameter of 1,000 µm or less, a sample is introduced at one end thereof, and high voltage is applied to the both ends.

The internal and external diameters, the total length and the effective length of the capillary used in capillary electrophoresis are not particularly limited, and any one of capillaries in the size commonly used may be used. The effective length of the capillary is preferably shorter for faster analysis. The effective length of capillary is the distance between the sample injection port and the detecting unit.

In the microchip electrophoresis, a microchip having an inlet channel and a separation channel placed crosswise with the inlet channel, and one end of the inlet channel to connected to a sample reservoir is connected to and the other end of the inlet channel to an outlet.

In the case of the microchip electrophoresis, the electrophoretic method according to the present invention include, specifically, a step of supplying a protein-containing sample to a sample reservoir without heat denaturation, a step of supplying the sample in the sample reservoir into a separation channel, and a step of electrophoresing the sample in a separation channel.

More specifically, the step of supplying the sample to sample reservoir progresses under a voltage applied between the sample reservoir at one end of the inlet channel and the outlet at the other end. The intensity of voltage depends on the device used, but in the case of SV1100 (manufactured by Hitachi Electronic Engineering), it is 50 to 800 V, normally 300 V. In this way, a sample is supplied through the inlet channel to the intersection with the separation channel.

More specifically, in the step of supplying the sample in the sample reservoir to the separation channel, a step of applying a squeezing voltage between the sample reservoir at one end of the inlet channel and the outlet at the other end and discharging an excessive sample to the sample reservoir and the outlet on the other end and a step of applying a separation voltage between the outlet side of the separation channel and the opposite side proceed at the same time. The voltage is selected properly according to the device used, but for example in the case of SV1100 (manufactured by Hitachi Electronic Engineering), the former is approximately 130 V, and the latter, 700 to 900 V. On the other hand, the method described in PCT/JP01/04510 is also applicable.

In microchip electrophoresis, the size of the microchip is, for example, 10 to 120 mm in length, 10 to 120 mm in width, and 500 to 5,000 µm in thickness.

The shape of the inlet and separation channels in the microchip is not particularly limited. A chip carrying 3 to 96 channels on a single chip may be used for simultaneous multi-channel analysis. The multiple channels may be formed in parallel, in the radial direction, in the circular form, or the like, and the shape is not particularly limited.

The width and the depth of the separation channel on the microchip are determined properly according to the size and application of the microchip. Specifically, the width of the microchannel is 0.1 µm or more, preferably 10 µm or more for obtaining a sufficiently high analytical sensitivity, and 1,000 µm or less, preferably 500 µm or less for obtaining a sufficiently high analytical accuracy. The depth of the microchannel is also determined properly, for example, according to the size and application of the microchip. Specifically, it is 0.1 µm or more, preferably 10 µm or more for obtaining a sufficiently high analytical sensitivity, and 1000 µm or less, preferably 500 µm or less for obtaining a sufficiently high analytical accuracy. The length of the separation channel may also be selected properly according to the size of the microchip and the compound to be analyzed, but the effective length is preferably longer. The effective length is a distance between the channel intersection and the detection point of the polymeric compound (in the separation channel). It is 0.1 mm or more, preferably 10 mm or more, for obtaining a sufficient separation efficiency, and 100 mm or less, preferably 50 mm or less, for high-speed separation.

The size of the reservoir may also be determined properly according to the volume of the sample. Specifically, the diameter is 0.05 mm or more, preferably 4 mm or less, from the viewpoint of handling efficiency in sample supply and the width of the electrode.

The electrophoretic field during microchip electrophoresis is 20 V/cm to 50 kV/cm, preferably 50 V/cm to 20 kV/cm, and more preferably 100 V/cm to 10 kV/cm, for obtaining favorable separation efficiency and shortening the electrophoretic development.

The nanochannel electrophoresis is an electrophoresis performed on a chip having channels at the nanometer size, i.e., having a channel width of 1 nm to 1 µm, preferably 10 to 500 nm, and more preferably 50 to 100 nm. It also includes the electrophoresis performed on a chip having the nanometer-sized structures described above formed in the micrometer-sized channels. The shape of the nanometer-sized structure is not particularly limited, and may be, for example, square, circle, triangle, or the like; and the distance between the structures formed is also not particularly limited. Nanochannel chips having such structures are used. It also includes the electrophoresis on a chip allowing simultaneous multi-channel analysis, as in the case of capillary electrophoresis.

The shape of the channel in nanochannel electrophoresis is not particularly limited, if the size thereof is in the nanometer scale, and the channel may be curved, meandering, jig-zag shaped, or in any shape in combination thereof. In this way, it is possible to form many channels on a micro-scale area. It is also possible in this way to process multiple samples simultaneously and increase the high-throughput of analysis. When a nanometer-sized structure is formed in a micrometer-sized channel, it is advantageous that the shape is freely adjustable and the installation distance is also freely adjustable. It is also possible to perform multi-channel measurement simultaneously.

Similarly to the chip in microchip electrophoresis, the chip in nanochannel electrophoresis also has an inlet channel, a separation channel placed crosswise to the inlet channel, a sample reservoir connected to one end of the inlet channel, and an outlet to the other end of the inlet channel, but the shape is not particularly limited.

The size of the nanochannel chip in nanochannel electrophoresis is the same as that of the microchip. It is, for example, 10 to 120 mm in length, 10 to 120 mm in width, and 500 to 5,000 µm in thickness. The depth and the length of the channels in the nanochannel chip and the size of the reservoir are the same as those of the channel in the microchip.

Examples of the methods of detecting the proteins developed in electrophoresis include absorption of UV wavelength ray, detection by fluorescence, laser, lamp, LED, or the like, electrochemical detection, chemical emission detection, and the like. Specifically, it is possible to detect proteins or peptides, by measuring the absorption at 200 nm, measuring the fluorescence at 550 to 650 nm after excitation at 460 to 550 nm of reaction products of a SYPRO Orange with proteins or peptides, measuring fluorescence at 670 to 700 after excitation at 630 to 650 nm of reaction products of proteins and a fluorescence marker (Agilent Technologies No. 5065-4430), measuring fluorescence at 640 to 700 after excitation at 550 to 650nm of reaction products of proteins and a fluorescence marker-(Molecular Probes Alexa633), or by electrochemical or chemical emission measurement, or the like.

In capillary electrophoresis, for example, a device emitting UV wavelength ray and a detector of the UV wavelength ray may be installed on the outlet of the capillary, or alternatively, a fluorescence wavelength ray-emitting device and the fluorescence wavelength ray-detecting detector may be installed.

In microchip electrophoresis, for example, a UV wavelength ray detector may be installed at the detection point on the separation channel, or alternatively, a fluorescence wavelength-emitting device and a fluorescence wavelength-detecting detector may be installed. It is also possible to detect proteins in multiple channels simultaneously.

The detector and the detection method used in the microchip electrophoresis are used in nanochannel electrophoresis. In addition, it is also possible to detect simultaneously during simultaneous multi-channel detection samples greater in number in nanochannel electrophoresis than in microchip electrophoresis.

During detection, the protein, peptide, or amino acid may be identified, for example, by UV absorption, comparison with molecular weight markers and standard samples, or mass spectrometric analysis.

The protein-processing chip according to the present invention may have regions for protein production, purification, dyeing in the cell-free system, in addition to the electrophoretic region.

The base material resin for the protein-processing chip according to the present invention may contain a black substance or be coated with it. The term "black" means that the black region does not have a spectroscopic reflectance in a particular spectrum pattern (e.g., particular peak) and has a consistently low reflectance in the visible light range (wavelength: 400 nm to 800 nm), and that the black region also has a consistently low spectroscopic transmissibility without a particular spectrum pattern.

As for the spectroscopic reflectance and transmissibility, the spectroscopic reflectance is preferably in the range of 7% or less in the visible light range (wavelength: 400 to 800 nm) and the spectroscopic transmissibility is preferably 2% or less in the same wavelength range. The spectroscopic reflectance is a spectroscopic reflectance when the regular reflected light from the base material is analyzed in an illumination/light-receiving optical system compatible with the condition specified in JIS Z 8722 term C.

The base material and the insulating material are made black, by adding a black substance thereto; the black substance is not particularly limited, if it does not allow light reflection or transmission, and favorable examples thereof include carbon black, graphite, titanium black, aniline black, oxides of Ru, Mn, Ni, Cr, Fe, Co and/or Cu, carbides of Si, Ti, Ta, Zr and/or Cr, and the like.

These black substances may be used alone or in combination of two or more. For example, when the base material or the insulating material is a polymer such as polyethylene terephthalate, cellulose acetate, polycarbonate, polystyrene, polymethyl methacrylate, or silicone resin, carbon black, graphite, titanium black, and aniline black are preferable, and carbon black is particularly preferable, among the black substances above. When it is an inorganic material such as glass or ceramic, an oxide of Ru, Mn, Ni, Cr, Fe, Co and/or Cu, or a carbide of Si, Ti, Ta, Zr and/or Cr may be favorably added.

The electrophoresis in the present invention is method of developing test substances through the microchannel, for example, by the difference or gradient in pressure, concentration, electric field, or magnetic field, by surface force, by inertia force, or by combination of these forces. It is possible in this way to analyze the properties of the test substances such as molecular weight, affinity, and electrical properties.

When the microchannel wall is charged with a charged substance, for example sodium dodecylsulfate, the microchannel wall attracts oppositely charged ions in the solution, for example sodium ion, into the area close to the wall to keep the area electrically neutral, forming an electrical bilayer; the electro-osmotic flow in the present invention is a phenomenon that electrical charges in the channel, when supplied into the microchannel then, flow by electrical repulsion by the ions present in the electrical bilayer. It is possible to control the electro-osmotic flow in the microchannel and perform electrophoresis in the microchannel, by covalently binding the hydrophilic polymer according to the present invention onto the microchannel wall.

Various test materials, including clinical samples for diagnosis of human diseases such as sputum, saliva, urine, feces, semen, blood, tissue, organ or other body fluids or fragments of these body fluids, and test samples for microbial contamination such as food, potable water, soil, wastewater, river water, sea water, wiping water and wiping cotton, can be analyzed on the protein-processing chip according to the present invention. Microbial culture solutions and microbes cultured on solid medium (colonies) can also be analyzed.

### EXAMPLES

The present invention will be described more specifically with reference to the following Examples, but it should be understood that the scope of the present invention is not limited only to the Examples.

### Example 1

A polymethyl methacrylate substrate having a size of 20×60 mm and a thickness of 0.2 mm was immersed in an aqueous solution containing a polyethylene glycol having a molecular weight of 500,000 at a concentration of 2,000 ppm. The immersed polymethyl methacrylate plate was sealed in a container, and irradiated with a gamma ray at an intensity of 2.5 kGy, allowing graft polymerization. The gamma ray-irradiated substrate was dried, and bonded to a fluorescent plate having a hole for light transmission. The bonded fluorescent plate was immersed in a diluted aqueous solution containing 10 µg/ml of FITC-labeled BSA protein and IgG protein at room temperature for 10 minutes, allowing immobilization of the proteins, and then washed with phosphate buffer (PBS) after removal of the solvent, and then, the fluorescence intensity thereof was determined.

### Comparative Example 1

A polymethyl methacrylate substrate having a size of 20×60 mm and a thickness of 0.2 mm was bonded to a fluorescent plate having a hole for light transmission without gamma ray irradiation, immersed in a diluted aqueous solution containing 10 µg/ml of FITC-labeled BSA protein and IgG protein at room temperature for 10 minutes, allowing immobilization of the proteins, and then washed with phosphate buffer (PBS) after removal of the solvent, to give a substrate of Comparative Example 1.

### [Reference Example]

A polymethyl methacrylate substrate having a size of 20×60 mm and a thickness of 0.2 mm was bonded to a fluorescent plate having a hole for light transmission without gamma ray irradiation, immersed in 1 mg/ml bovine serum albumin (BSA) phosphate buffer solution at room temperature for 1 hour, allowing immobilization of the protein, then washed with phosphate buffer solution, immersed in a diluted aqueous solution containing 10 µg/ml of FITC-labeled BSA protein and IgG protein at room temperature for 10 minutes, allowing immobilization of the proteins, and then washed with phosphate buffer (PBS) after removal of the solvent, to give a substrate of Reference Example. The substrate of Reference Example, which is prepared by coating of a hydrophilic polymer, is not practical as a lab-on-chip substrate because the hydrophilic polymer is easily removed, but was compared with the substrate of the present invention as a conventional method of suppressing adsorption of protein.

The amount of the protein remaining on the chips in Example 1, Comparative Example 1 and Reference Example was determined and the results are summarized in Table 1. The value in the Table is fluorescence intensity, and a smaller value indicates that a smaller amount of protein is adsorbed.

In Example 1, in which polyethylene glycol is covalently bound to the resin substrate by gamma ray irradiation, the amount of the protein adsorbed is reduced to 1/4 to 1/6, compared to that on the resin substrate in Comparative Example 1 having the polyethylene glycol not covalent bound with gamma ray. The results indicate that the substrate of the present invention is as effective in protein-adsorption suppressing potential as the substrate prepared by a conventional method in Reference Example.

**Table 1**

| | Protein adsorption (fluorescence intensity) | |
|---|---|---|
| | Fluorescent-labeled BSA | Fluorescent-labeled IgG |
| Example 1 | 1.489 | 1.245 |
| Comparative Example 1 | 5.889 | 9.637 |
| Reference Example 1 | 1.408 | 1.218 |

A microchannel having a channel size of 0.04×0.1 mm and a length of 10 cm was prepared from each of these materials, and the recovery rate of protein when a protein is allowed to flow through the channel was determined, and the results are summarized in Table 2. A greater value in the Table indicates that the protein adsorption is lower and the recovery rate is higher.

In the Example 1, in which polyethylene glycol is covalently bound to the resin substrate by gamma ray irradiation, the recovery rates of the fluorescent-labeled BSA protein and fluorescent-labeled IgG protein were increased respectively by approximately 20% and 30% in the microchannel, compared to those of the substrate in Comparative Example 1 not having the polyethylene glycol covalent bound with gamma ray.

**Table 2**

| | Protein recovery rate (%) | |
|---|---|---|
| | Fluorescent-labeled BSA | Fluorescent-labeled IgG |
| Example 1 | 0.923 | 0.936 |
| Comparative Example 1 | 0.729 | 0.596 |
| Reference Example 1 | 0.927 | 0.937 |

### Example 2

An aqueous solution containing a polyethylene glycol having a molecular weight of 500,000 at a concentration of 2,000 ppm was filled in a microchannel of 100 µm in width × 60 µm in depth × 50 cm in length formed on a polymethacrylate substrate, and irradiated with gamma ray at an intensity of 2.5 kGy, allowing graft polymerization. After irradiation, the aqueous polyethylene glycol solution in the microchannel was removed, and washed with purified water. A solution containing E. coli-derived cell-free protein synthesis system was injected and left in a microchannel at 30°C for 1 hour, allowing production of chloramphenicol acetyl transferase (CAT), an enzyme having a molecular weight of 26,000 that transfers the acetyl group of acetyl CoA to the 3'-hydroxyl group of chloramphenicol. The CAT protein produced in the microchannel was recovered, and quantitatively determined by ELISA in Example 2.

### Comparative Example 2

The microchannel on the polymethacrylate substrate having a microchannel of 100 µm in width × 60 µm in depth × 50 cm in length was washed with purified water. A solution containing E. coli-derived cell-free protein synthesis system was injected and left in the microchannel at 30°C for 1 hour, allowing production of the CAT protein. The CAT protein produced in the microchannel was recovered, and quantitatively determined by ELISA in Comparative Example 2.

The amounts of the protein produced in Example 2 and Comparative Example 2 were determined, and the results are summarized in Table 3.
In Example 2, where the polyethylene glycol is covalently bound to the resin substrate by gamma ray irradiation, the amount of the protein produced was twice greater than that in Comparative Example 2, where it is not covalently bound with gamma ray.

**Table 3**

| | Example 2 | Comparative Example 2 |
|---|---|---|
| Amount of CAT produced | 264ng | 133ng |

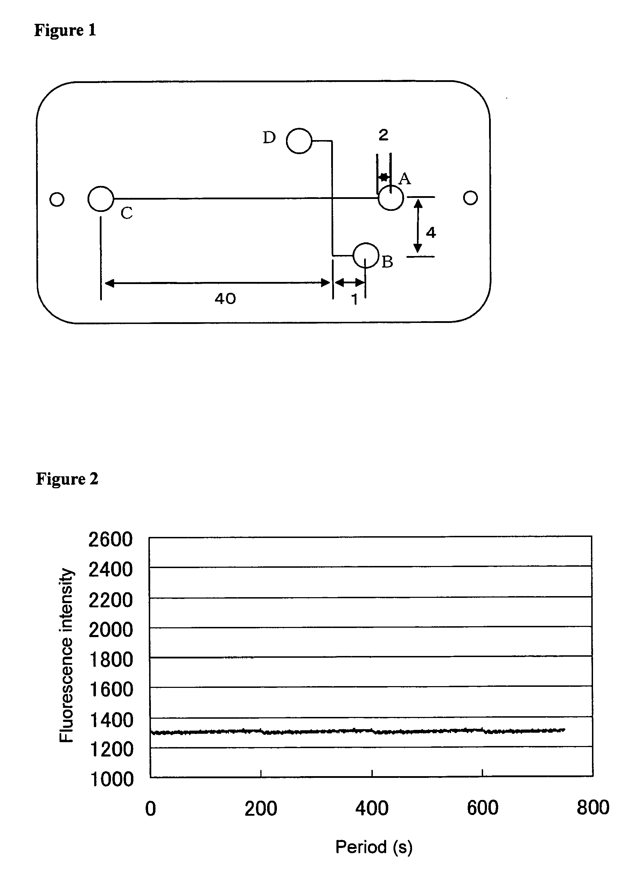

Figure 1 is a schematic view illustrating the polymethacrylate chip for protein electrophoresis having a microchannel with a diameter of 100 µm used in the following Example 3, Comparative Example 3, and Examples 4 to 7.

### Example 3

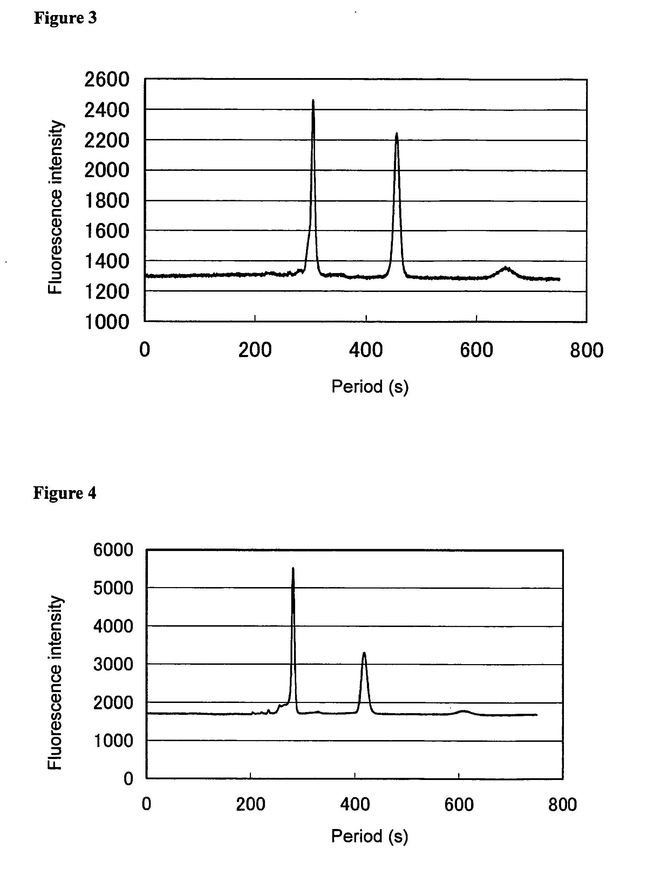

A polymethyl methacrylate-based electrophoretic chip having a channel of 100 µm in diameter was immersed in an aqueous solution containing a polyethylene glycol having a molecular weight of 500,000 at a concentration of 2,000 ppm. The immersed polymethyl methacrylate plate was sealed in a container, and irradiated with a gamma ray at 2.5 kGy, allowing graft polymerization. The polyethylene glycol in the channel was removed; 5% polyacrylamide (molecular weight: 600,000 to 1,000,000) solution in 0.1 M Tris-aspartic acid (pH 8) was filled; 5% polyacrylamide (molecular weight: 600,000 to 1,000,000) solution in 0.1 M Tris-aspartic acid (pH 8) was added to the A, B, and C regions shown in Figure 3; and 0.05 M Tris-HCl (pH 8) solution of fluorescent-labeled trypsin inhibitor and fluorescent-labeled BSA containing 1% SDS was filled in the D region. An electrode was connected to each of the A, B, C, and D regions on the electrophoretic chip filled with the polyacrylamide or protein solution, and a voltage of 350 V was applied to B for 1 minute, then, a voltage of 500 V to C and 150 V to B and D were applied for electrophoresis in Example 3.

### Comparative Example 3

5% polyacrylamide (molecular weight 600,000 to 1,000,000) solution in 0.1 M Tris-aspartic acid (pH 8) was filled in polymethyl methacrylate-based electrophoretic chip having a channel of 100 µm in diameter; 5% polyacrylamide (molecular weight 600,000 to 1,000,000) solution in 0.1 M Tris-aspartic acid (pH 8) was added to the A, B, and C regions shown in Figure 3; a fluorescent-labeled trypsin inhibitor and fluorescent-labeled BSA solution in 0.05 M Tris-HCl (pH 8) containing 1% SDS was added into the D region. An electrode was connected to each of the A, B, C, and D regions on the electrophoretic chip filled with the polyacrylamide or protein solution, and a voltage of 350 V was applied to B for 1 minute. Then, a voltage of 500 V to C and 150 V to B and D were applied for electrophoresis in Comparative Example 3.

Figures 2 and 3 show the results by electrophoretic analysis of the proteins obtained in Example 3 and Comparative Example 3. In Comparative Example 3, where a polyethylene glycol is not covalently bound by gamma ray irradiation, the proteins were not developed (Figure 2), but in Example 2, where it is covalently bound with gamma ray, the proteins are detected as bands, confirming separation and development of the proteins (Figure 3).

### Example 4

A polymethyl methacrylate-based electrophoretic chip having a channel of 100 µm in diameter was immersed in an aqueous solution containing a polyethylene glycol having a molecular weight of 500,000 at a concentration of 2,000 ppm. The immersed electrophoretic chip was sealed in a container, and irradiated with gamma ray at an intensity of 2.5 kGy, allowing graft polymerization. The polyethylene glycol in the channel was removed, and the chip was washed with 10 N hydrochloric acid. After washing, 5% polyacrylamide (molecular weight 600,000 to 1,000,000) solution in 0.1 M Tris Aspartic Acid (pH 8) was filled; 5% polyacrylamide (molecular weight 600,000 to 1,000,000) solution in 0.1 M Tris-aspartic acid (pH 8) was added into the A, B, and C regions shown in Figure 3; a fluorescent-labeled tripsin inhibitor and fluorescent-labeled BSA solution in 0.05 M Tris-HCl (pH 8) containing 1% SDS was filled into the D region. An electrode was connected to each of the A, B, C, and D regions on the electrophoretic chip filled with the polyacrylamide or protein solution, and a voltage of 350 V was applied to B for 1 minute. Then, a voltage of 500 V to C and 150 V to B and D were applied for electrophoresis in Example 4.

### Example 5

A polymethyl methacrylate-based electrophoretic chip having a channel of 100 µm in diameter was immersed in an aqueous solution containing a polyethylene glycol having a molecular weight of 500,000 at a concentration of 2,000 ppm. The immersed polymethyl methacrylate plate was sealed in a container, and irradiated with a gamma ray at 2.5 kGy, allowing graft polymerization. The polyethylene glycol in the channel was removed, and the chip was washed with 10 N hydrochloric acid. After washing, 5% polyacrylamide (molecular weight 600,000 to 1,000,000) solution in 0.1 M Tris Aspartic Acid (pH 8) was filled; 5% polyacrylamide (molecular weight 600,000 to 1,000,000) solution in 0.1 M Tris-aspartic acid (pH 8) was added into the A, B, and C regions shown in Figure 3; a fluorescent-labeled tripsin inhibitor and fluorescent-labeled BSA solution in 0.05 M Tris-HCl (pH 8) containing 1% SDS was filled into the D region. An electrode was connected to each of the A, B, C, and D regions on the electrophoretic chip filled with the polyacrylamide or protein solution, and a voltage of 350 V was applied to B for 1 minute. Then, a voltage of 500 V to C and 150 V to B and D were applied for electrophoresis in Example 5.

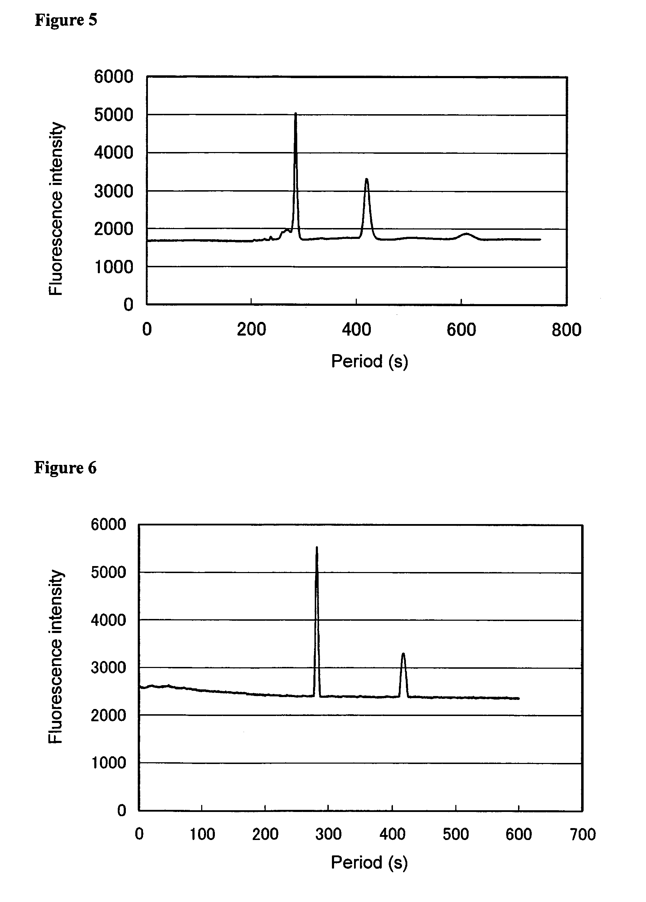

Figures 4 and 5 show the results by electrophoretic analysis of the proteins obtained in Examples 4 and 5. The results showed that the protein was separated and developed on a chip carrying a polyethylene glycol covalently bound to the resin substrate with gamma ray even when the channel was washed with a strong acid or base.

### Example 6

A polymethyl methacrylate-based electrophoretic chip having a channel of 100 µm in diameter was immersed in an aqueous solution containing a polyethylene glycol having a molecular weight of 500,000 at a concentration of 2,000 ppm. The immersed polymethyl methacrylate plate was sealed in a container, and irradiated with a gamma ray at 5.0 kGy, allowing graft polymerization. The polyethylene glycol in the channel was removed, and the channel was washed with 10 N sodium hydroxide solution. After washing, 5% polyacrylamide (molecular weight 600,000 to 1,000,000) solution in 0.1 M Tris Aspartic Acid (pH 8) was filled; 5% polyacrylamide (molecular weight 600,000 to 1,000,000) solution in 0.1 M Tris-aspartic acid (pH 8) was added into the A, B, and C regions shown in Figure 3; a fluorescent-labeled tripsin inhibitor and fluorescent-labeled BSA solution in 0.05 M Tris-HCl (pH 8) containing 1% SDS was filled into the D region. An electrode was connected to each of the A, B, C, and D regions on the electrophoretic chip filled with the polyacrylamide or protein solution, and a voltage of 350 V was applied to B for 1 minute. Then, a voltage of 500 V to C and 150 V to B and D were applied for electrophoresis in Example 6.

### Example 7

A polymethyl methacrylate-based electrophoretic chip having a channel of 100 µm in diameter was immersed in an aqueous solution containing a polyethylene glycol having a molecular weight of 500,000 at a concentration of 2,000 ppm. The immersed polymethyl methacrylate plate was sealed in a container, and irradiated with a gamma ray at 10.0 kGy, allowing graft polymerization. The polyethylene glycol in the channel was removed, and the channel was washed with 10 N sodium hydroxide solution. After washing, 5% polyacrylamide (molecular weight 600,000 to 1,000,000) solution in 0.1 M Tris Aspartic Acid (pH 8) was filled; 5% polyacrylamide (molecular weight 600,000 to 1,000,000) solution in 0.1 M Tris-aspartic acid (pH 8) was added into the A, B, and C regions shown in Figure 3; a fluorescent-labeled tripsin inhibitor and fluorescent-labeled BSA solution in 0.05 M Tris-HCl (pH 8) containing 1% SDS was filled into the D region. An electrode was connected to each of the A, B, C, and D regions on the electrophoretic chip filled with polyacrylamide or protein solution, and a voltage of 350 V was applied to B for 1 minute. Then, a voltage of 500 V to C and 150 V to B and D were applied for electrophoresis in Example 7.

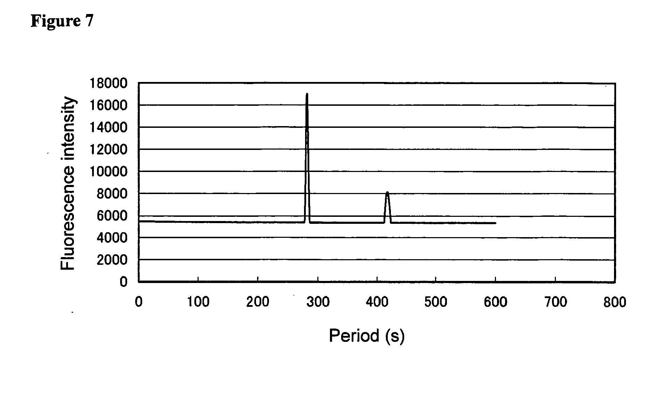

Figures 6 and 7 show the results by electrophoretic analysis of the proteins obtained in Examples 6 and 7. It was possible to detect proteins without adverse influence by yellowing of the resin substrate on detection of test sample even when the substrate was irradiated with gamma ray at an irradiation intensity of 5 or 10 kGy.

### [Industrial Applicability]

The present invention provides a lab-on-chip substrate resistant to washing and usable for an extended period of time without adsorption of proteins on the base material surface, i.e., a polymeric chip for protein electrophoresis having a microchannel allowing high-accuracy analysis of trace amounts of proteins because of reduction in the amount of detection noise.

### [BREIF DESCRIPTION OF THE DRAWINGS]

Figure 1 is a schematic view illustrating a protein electrophoretic chip having a microchannel.
Figure 2 is an electrophoretic chart obtained when fluorescent-labeled proteins are electrophoresed on a protein electrophoretic chip that is not covalently bound to polyethylene glycol.
Figure 3 is an electrophoresis chart obtained when fluorescent-labeled proteins are electrophoresed on a protein electrophoretic chip that is covalently bound to polyethylene glycol.
Figure 4 is an electrophoresis chart obtained when fluorescent-labeled proteins are electrophoresed after the channel on a protein electrophoretic chip that is covalently bound to polyethylene glycol is washed with 10 N hydrochloric acid.
Figure 5 is an electrophoresis chart obtained when fluorescent-labeled proteins are electrophoresed after the channel on a protein electrophoretic chip that is covalently bound to polyethylene glycol is washed with 10N sodium hydroxide.
Figure 6 is an electrophoresis chart obtained when fluorescent-labeled proteins are electrophoresed on a protein electrophoretic chip that is covalently bound to polyethylene glycol by gamma ray irradiation at an intensity of 5.0 kGy.
Figure 7 is an electrophoresis chart obtained when fluorescent-labeled proteins are electrophoresed on a protein electrophoretic chip that is covalently bound to polyethylene glycol by gamma ray irradiation at an intensity of 10.0 kGy.

## Claims

1. A lab-on-chip substrate, comprising a resin having a silicon content of 10% or less by weight as its base material and a hydrophilic polymer covalently bound onto the surface thereof.

2. The lab-on-chip substrate according to Claim 1, wherein the hydrophilic polymer is covalently bound to the surface of the base material by high-energy ray irradiation.

3. The lab-on-chip substrate according to Claim 1, wherein the high-energy ray is gamma ray.

4. The lab-on-chip substrate according to Claim 3, wherein the absorption energy of the gamma ray is 10 kGy or less.

5. The lab-on-chip substrate according to Claim 1, wherein the hydrophilic polymer is a polyalkylene glycol.

6. The lab-on-chip substrate according to Claim 1, wherein the base material is at least one resin selected from polysulfone resins, polymethacrylic resins, poly-amide resins, and polyacrylonitrile.

7. A protein-processing chip, comprising the lab-on-chip substrate according to Claim 1.

8. The protein-processing chip according to Claim 7, wherein the polyalkylene glycol is covalently bound only to the channel in the protein-processing chip by high-energy ray irradiation.

9. The protein-processing chip according to Claim 7, for use in protein phoresis.

10. The protein-processing chip according to Claim 7, for use in protein electrophoresis.

11. The protein-processing chip according to Claim 7, wherein the electro-osmotic flow in the electrophoresis is reduced
